# EUROPEAN PATENT SPECIFICATION

(11) **EP 0 343 883 B1**
(45) Date of publication and mention of the grant of the patent: **17.07.1996**
(21) Application number: 89305120.1
(22) Date of filing: 19.05.1989
(51) Int. Cl.: G06F 9/44

(54) **A modular compiler for a computer system**
Modularer Compiler für ein Rechnersystem
Compilateur modulaire pour un système d'ordinateur

(30) Priority: 23.05.1988 US 197795
(43) Date of publication of application: 29.11.1989
(73) Proprietor: Hewlett-Packard Company, Palo Alto, California 94304 (US)
(72) Inventor: Packard, Barbara B., Los Altos Hills, CA 94022 (US); Watson, Ralph Thomas, San Jose, CA 95129 (US); Stearns, Glenn, Scotts Valley, CA 95066 (US)
(74) Representative: Williams, John Francis

(56) References cited:
- EP-A- 0 236 744
- COMMUNICATIONS OF THE ASSOCIATION OF COMPUTING MACHINERY, vol. 26, no. 9, September 1983, pp. 654-660, New York, US; A.S. TANENBAUM et al.: "A practical tool kit for making portable compilers"
- IEEE TRANSACTIONS ON SOFTWARE ENGINEERING, vol. SE-11, no. 4, April 1985, pp. 424-436, IEEE, New York, US; J. KRAMER et al.: "Dynamic configuration for distributed systems"
- F.L. BAUER et al.: "Compiler Construction - An advanced course", second edition, 1976, pp. 109-120, Springer-Verlag, New York, US; FRANKLIN L. DEREMER: "Lexical analysis"
- HEWLETT-PACKARD JOURNAL, vol. 40, no. 1, February 1989, pp. 70-73, Palo Alto, California, US; M.D. TALBOT: "Firmwave design for a multiple-mode instrument"
- C.D.F.Miller et al.: "Unix for users", Blackwell, Oxford, UK, 1984; Chapter 6: "The shell as a programming language"

## Description

The present invention relates to the use of a modular compiler to compile code to be executed by an agent engine and a plurality of application programmes running on a computer.

In computer systems it is known to have a shell or batch system which accepts scripts for execution. The scripts consist of commands which are carried out directly by the shell, commands which invoke applications, and input for the invoked applications. Such a system is described in "UNIX for Users" by C.D.F. Miller et al, Blackwell Oxford, U.K., 1984, Chapter 6. However, it is not suggested that the shell should compile code before it is sent to an Application.

Some commercially available application programmes, for instance many popular spreadsheet and data base programs, implement command languages which allow a user to type in commands which are stored in a script file for later batch execution. These scripts allow a user to run a complicated set of commands automatically. Additionally, the user can simplify down to the execution of a script an often repeated task.

However, present implementations of command language scripts are severely limited in capability. For example, current schemes are application dependent. Each application generates its own command language script, which is only executable by that application. There is no facility for multiple applications to execute the same script. Furthermore, the script files that are generated are very difficult to understand and modify because the script files contain the commands actually executed by the application.

EP-A-0 236 744 discloses a system to convert scripts of commands for an application into a form more appropriate for machine reading. However, translation is only for a single application.

According to a first aspect of the invention there is provided a computing system as specified in claim 1.

In accordance with the preferred embodiments of the present invention a computing system is presented which includes a plurality of applications and an agent engine. Each application program executes a series of semantic commands.

A modular compiler is used to compile code for executing by the application programs and by the agent engine. The modular compiler includes a class independent compiler which parses program code which is to be executed by the agent engine. The modular compiler also includes a class dependent parser for each application program. Each class dependent parser parses program code which is to be executed by its respective application program. When an application program is added to the computing system, an associated class dependent parser is added to the modular compiler. When an application program is removed from the computing system, the associated class dependent parse is removed from the modular compiler.

According to a further aspect at the invention there is provided a method for compiling programme code as specified in claim 7.

The present invention allows great versatility in allowing applications to be added or subtracted from a computing system. When a new application is to be added to a computing system, it is not necessary to rewrite a compiler to take into account commands executed by the new application. Rather, a separate class dependent parser may be added to the modular compiler for generating commands to be executed by the new application.

Figure 1 is a block diagram which shows the interaction between an application, an agent environment and a help environment.

Figure 2 is a block diagram which shows how a task language file is generated and executed in accordance with the preferred embodiment of the present invention.

Figure 3 is a block diagram of the application shown in Figure 1 in accordance with a preferred embodiment of the present invention.

Figure 4 is a block diagram showing data flow through the application shown in Figure 1 in accordance with a preferred embodiment of the present invention.

Figure 5 is a diagram of a compiler in accordance with a preferred embodiment of the present invention.

Figure 6 shows a computer, monitor, keyboard and mouse in accordance with the preferred embodiment of the present invention.

Figure 7 shows a top view of the mouse shown in Figure 6.

Figure 8 through Figure 18 show how the display on the monitor shown in Figure 6 appears in a user session during which user actions are recorded and played back in accordance with the preferred embodiment of the present invention.

Figure 19 shows data flow within the compiler shown in Figure 5.

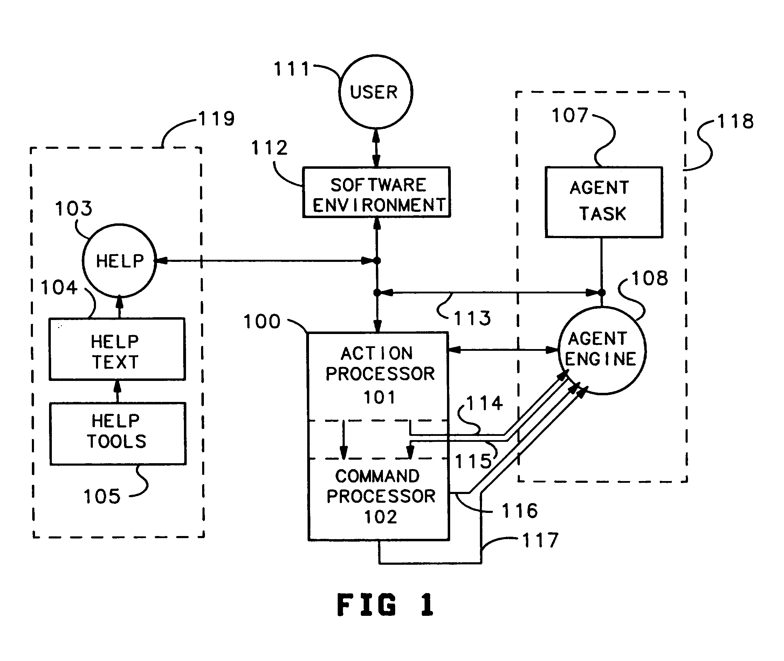

Figure 1 is a block diagram of a computing system in accordance with a preferred embodiment of the present invention. A user 111 communicates with the computing system through a software environment 112. Software environment 112 may be, for instance, Microsoft Windows, a program sold by Microsoft Corporation, having a business address at 16011 NE 36th Way, Redmond, WA 98073-9717. Software environment 112 interacts with an application 100. Messages containing information describing user actions are sent to application 100 by software environment 112. In the preferred embodiment the messages containing user actions are standard messages sent by Microsoft Windows. Application 100 includes an action processor 101 which converts syntactic user actions to a single semantic command. For example, action processor 101 observes the clicks and movements of a mouse used by a user, and waits until a syntactically meaningful command has been generated. Action processor 101 is able to syntactically interpret the many ways a user can build a particular command. In addition to syntactic user actions, action processor 101 also processes other messages received by application 100. Some messages will result in a semantic command being generated; others will be dealt with entirely by action processor 101.

Application 100 also includes a command processor 102 which executes semantic commands. Command processor 102 receives semantic commands in internal form (internal form is discussed more fully below) and returns an error if a command cannot be executed.

Application 100 and software environment 112 interact with help environment 119 at the level of the interface between software environment 112 and application 100. Help environment 119 includes a help application 103, which utilizes a help text 104. Help environment 119 also includes help tools 105 which are used to generate help text 104.

Software environment 112 also interacts with an agent environment 118. Agent environment 118 includes an agent task 107 and an agent engine 108.

Agent engine 108 interacts with application 100 at five different conceptual categories, in order to perform five functions. Agent engine 108 interacts with action processor 101 through a data channel 113 for the purpose of interrogation. Agent engine 108 interacts between action processor 101 and command processor 102 through a data channel 114 for the purpose of monitoring the activities of application 100. Agent engine 108 interacts with command processor 102 through a data channel 115 for the purpose of having commands executed by application 100. Agent engine 108 interacts with command processor 102 through a data channel 116 for the purpose of handling errors in the processing of a command within application 100. Agent engine 108 interacts with command processor 102 through a data channel 117 for the purpose of recording execution of application 100 and receiving notification of the completion of a command.

In the preferred embodiment of the present invention, commands may be represented in four ways, (1) in task language form, stored as keywords and parameters, (2) in pcode form, which are binary codes in external form with additional header interpreted by agent 108; (3) in external form, which are binary data understood by application 100 and which are passed between agent 108 and application 100; and (4) in internal form, as binary commands which are executed within application 100.

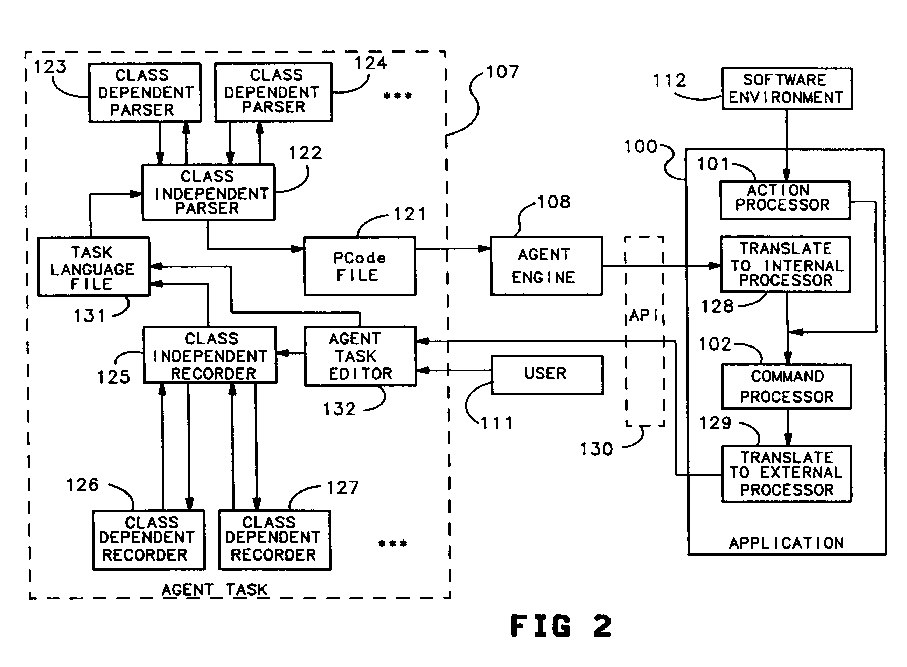

Figure 2 shows a block diagram of how the overall agent system functions. A task language file 131 is a file containing task language. Task language is the text form of commands that describe an application's functionality. Task language is comprised of class dependent commands and class independent commands. Class dependent commands are commands which are to be performed by an application. In Figure 2, just one application, application 100 is shown; however, agent 108 may interact with many applications.

In the preferred embodiment of the present invention, data files to be operated on by applications are referenced by the use of objects. Each object contains a reference to a data file and a reference to an application. Those objects which refer to the same application are said to be members of the same class. Each application executes a different set of commands. Class dependent commands therefore differ from application to application.

Agent 108 executes class independent commands which are commands understood by agent 108. Class independent commands are executed by agent 108, not by an application.

Task language file 131 is used by a class independent parser 122 to prepare a pcode file 121. In preparing pcode file 121, independent parser 122 calls class dependent parsers 123, 124 and etc. As will be further described below, a class dependent parser is a parser which generates class dependent commands which are encapsulated in pcode form. Agent 108 extracts the commands in their external form from the pcode form and forwards these commands to the appropriate application. A class field within the pcode indicates which application is to receive a particular class dependent command. Class independent parser 122 is a parser which generates pcodes which are executed by agent 108.

Task language file 131 may be prepared by user 111 with an agent task editor 132. Alternately, task language file may be prepared by use of a class independent recorder 125 which utilizes class dependent recorders 126, 127 and etc. Generally, a recorder records the commands of applications for later playback. When the computing system is in record mode, agent task editor 132 receives input from applications, such as shown application 100, which detail what actions agent engine 108 and the applications take. Applications communicate to agent task editor 132 through an application program interface (API) 130. Agent task editor 132, forwards data to class independent recorder 125 when the computing system is in record mode, and to task language file 131 when agent task editor is being used by user 111.

Class independent recorder 125 receives the information and builds task language file 131. When class independent recorder 125 detects that agent task editor 132 is forwarding information about an action taken by an application, class independent recorder calls the class dependent recorder for that application, which then generates the task language form for that action. Class independent recorder also generates the task language form for an action to be taken by agent engine 108.

When executing pcode file 121, agent engine 108 reads each pcode command and determines whether the pcode command contains a class independent command to be executed by agent 108, or a class dependent command to be executed by an application. If the pcode command contains a class independent command, agent 108 executes the command. If the pcode command contains a class dependent command, agent 108 determines by the pcode command the application which is to receive the command. Agent 108 then extracts a class dependent command in external form, embedded within the pcode. This class dependent command is then sent to the application. For instance, if the class dependent command is for application 100, the class dependent command is sent to application 100. Within application 100 a translate to internal processor 128 is used to translate the class dependent command--sent is external form-- to the command's internal form.

In the interactions between agent engine 108 and application 100, API 130 is used. API 130 is a set of functions and messages for accessing agent engine 108 and other facilities.

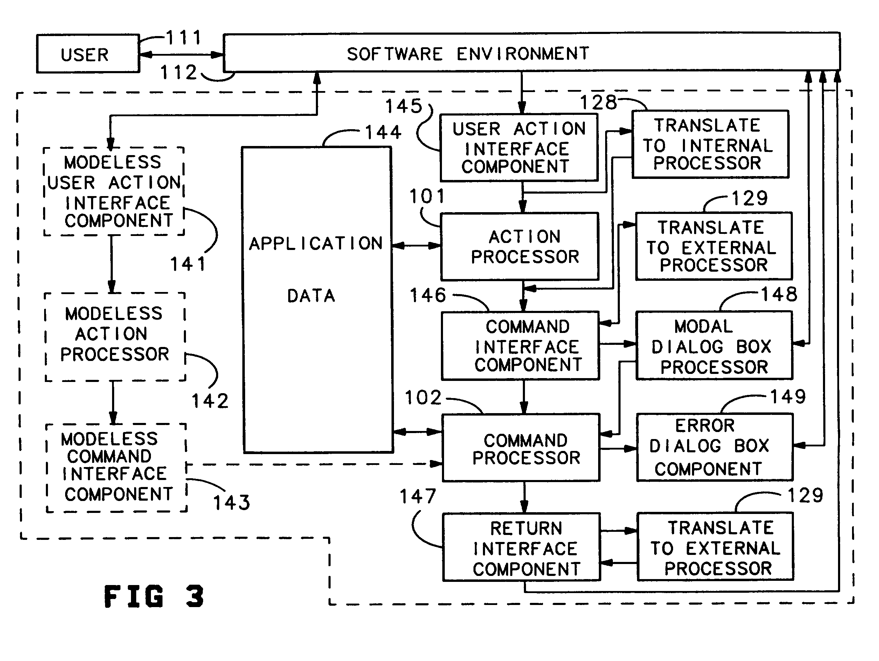

When the system is in record mode, translate to internal processor 128 translates commands from agent engine 108 and feeds them to command processor 102 through a command interface component 146 shown in Figure 3. A translate to external processor 129 receives commands in internal form that have been executed by command processor 102. The commands are received through return interface component 147, shown in Figure 3. Translate to external processor 129 translates the commands in internal form to commands in external form. The commands in external form are then transferred through API 130 to task editor 132.

Figure 3 shows in more detail the architecture of application 100 in the preferred embodiment of the present invention. Application 100 includes a user action interface component 145 which interacts with software environment 112 and command interface component 146 which communicates with both action processor 101 and command processor 102. As shown both action processor 101 and command processor 102 access application data 144. A return interface component 147 is responsive to command processor 102 and returns control back to software environment 112. Translate to external processor 129 is shown in interact with return interface component 147. Return interface component 147 is only called when application 100 is in playback mode or record mode. These modes are more fully described below. Return interface component 147 indicates to agent engine 108 that a command has been executed by application 100 and application 100 is ready for the next command.

Also included in application 100 are a modal dialog box processor 148 and an error dialog box component 149. Both these interact with software environment 112 to control the display of dialog boxes which communicate with a user 111.

Some applications are able to operate in more than one window at a time. When this is done a modeless user action interface component, a modeless action processor, and a modeless command interface component is added for each window more than one, in which an application operates. For example, in application 100 is shown a modeless user action interface component 141, a modeless action processor 142 and a modeless command interface component 143.

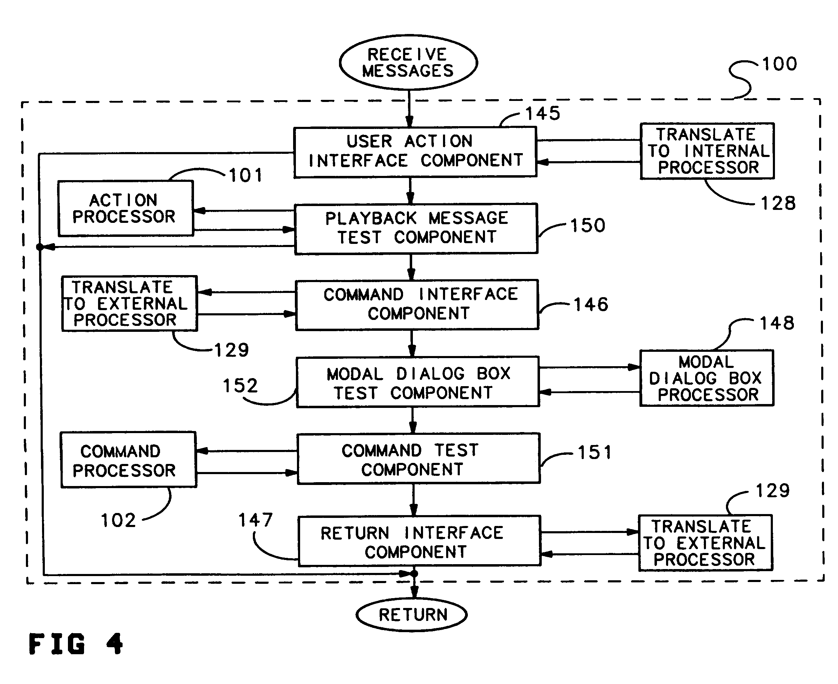

Figure 4 shows data flow within application 100. Messages to application 100 are received by user action interface component 145. For certain types of messages--e.g., messages from help application 103--user action interface 145 causes application 100 to return immediately. Otherwise the message is forwarded to a playback message test component 150.

If the message is for playback of commands which have been produced either by recording or parsing, the message is sent to translate to internal processor 128 which translates a command within the message from external form to internal form. The command is then forwarded to command interface component 146.

If the message is not a playback message the message is sent to action processor 101 to, for example, syntactically interpret a user's action which caused the generation of the message. If there is no semantic command generated by action processor 101, or produced by internal processor 128 playback message test component 150 causes application 100 to return. If there is a semantic command generated the command is forwarded to command interface component 146.

If agent 108 is monitoring execution of commands by application 100, command interface component 146 sends any data received to translate to external processor 129 which translates commands to external form and transfers the commands to agent 108. Command interface component also forwards data to a modal dialog box test component 152.

If the forwarded data contains a request for a dialog box, modal dialog box test component 152 sends the data to modal dialog box processor 148 for processing. Otherwise modal dialog box test component 152 sends the data to command test component 151.

If the data contains a command, command test component 151 sends the command to command processor 102 for execution. Command test component 151 sends the data to return interface component 147.

If agent 108 is recording commands, return interface component 147 sends the data to translate to external processor 129 for translation to external form and transfer to agent 108 via return interface component 147. Return interface component returns until the next message is received.

The following discussion sets out how actions may be recorded and played back according to the preferred embodiment of the present invention.

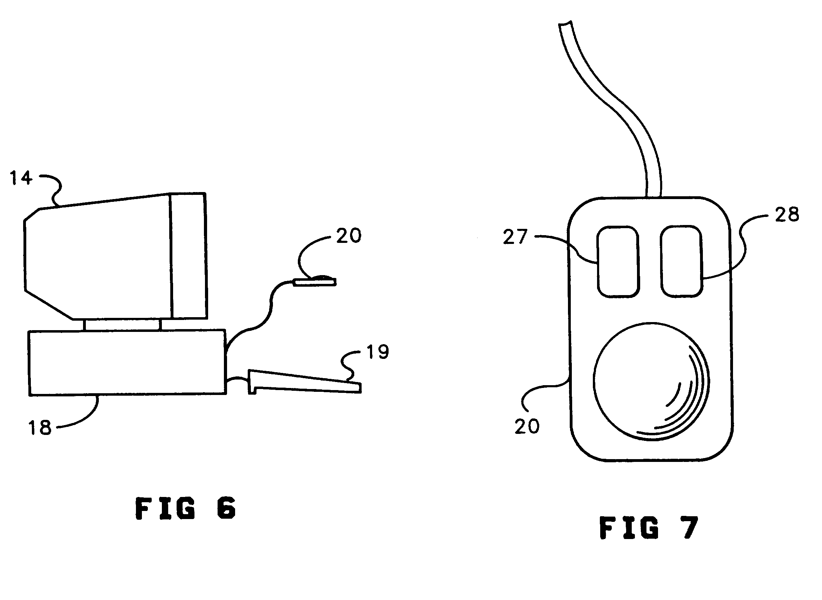

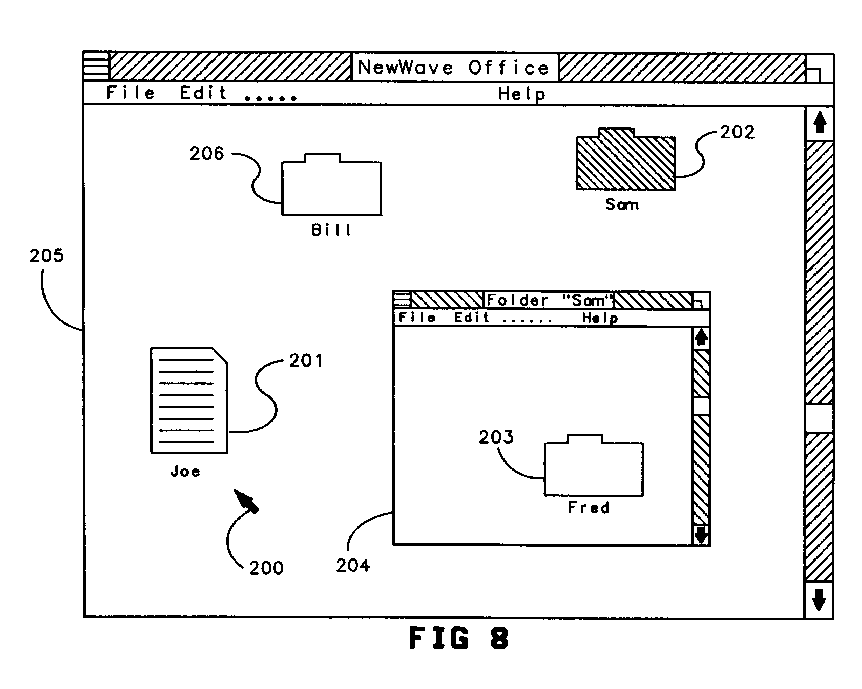

In Figure 8 an application "NewWave Office" is running in a window 205 as shown. Within window 205 is shown an object "Joe" represented by icon 201, a folder "Bill" represented by an icon 206, and a folder "Sam" represented by an icon 202. Object "Joe" contains a reference to a text file and a reference to an application which operates on the text file. Folder "Sam" has been opened; therefore, icon 202 is shaded and a window 204 shows the contents of Folder "Sam". Within folder "Sam" is a folder "Fred" represented by an icon 203. A cursor 200 is controlled by a mouse 20 or a keyboard 19, as shown in Figure 6.

Figure 6 also shows a computer 18 and a monitor 14 on which window 205 is shown. Figure 7 shows mouse 20 to include a button 27 and a button 28.

Object "Joe" may be placed in folder "Bill" by using mouse 20 to place cursor 200 over object "Joe", depressing button 27, moving cursor 200 over folder "Bill" and releasing button 27. Similarly, object "Joe" may be placed within folder "Sam" by using mouse 20 to place cursor 20 over object "Joe", depressing button 27, moving cursor 200 within window 204 and releasing button 27. Finally, object "Joe" may be placed in folder "Fred" by using mouse 20 to place cursor 20 over object "Joe", depressing button 27, moving cursor 200 over folder "Fred" and releasing button 27.

Placement of object "Joe" in folder "Fred", within folder "Sam" or in folder "Bill" may be recorded as will now be described. Each time a user moves mouse 20, a message containing a syntactic user action is received by user action interface component 145, and relayed to action processor 101 through playback message test component 150. Based on these syntactic user actions, action processor 101 generates a semantic command which is executed by command processor 102.

The following describes the recording of the placement of object "Joe" in folder "Bill". In Figure 8, window 205 is active. Cursor 200 may be moved about freely in window 205. When the user moves mouse 20, syntactic user actions are sent to action processor 101 as described above. Action processor 101 keeps track of the coordinate location of cursor 200. When button 27 is depressed, action processor 101 checks to see what exists at the present coordinate location of cursor 200. If cursor 200 is placed over object "Joe" when button 27 is depressed, action processor 101 discovers that object "Joe" is at the location of cursor 200. At this time action processor 101 generates a semantic command "Select Document "Joe". The semantic command is passed through playback message test component 150, through command interface component 146 through modal dialog box test component 152 through command test component 151 to command processor 102, which performs the semantic command. The semantic command is also received by Return Interface Component 147 and sent to translate to external processor 129. Translate to external processor puts the command in external form and sends it to class independent recorder 125 and thus to class dependent recorder 126 which records the command in task language form in a task language file.

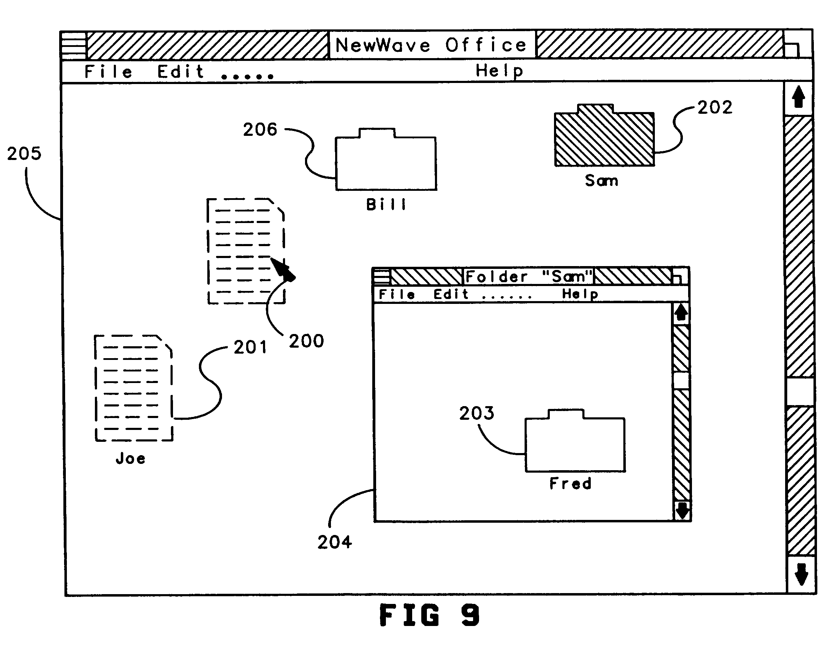

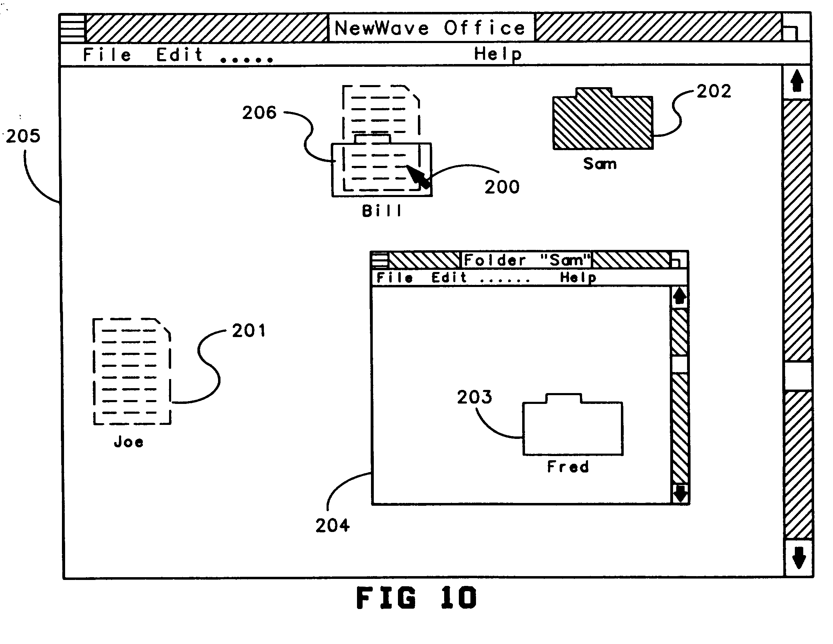

As mouse 20 is moved syntactic user actions continue to be sent to action processor 101. Action processor continues to keep track of the coordinate location of cursor 200. In Figure 9, cursor 200 is shown to be moving a "phantom" of object "Joe". In Figure 10, cursor 200 is shown to be placed over folder "Bill".

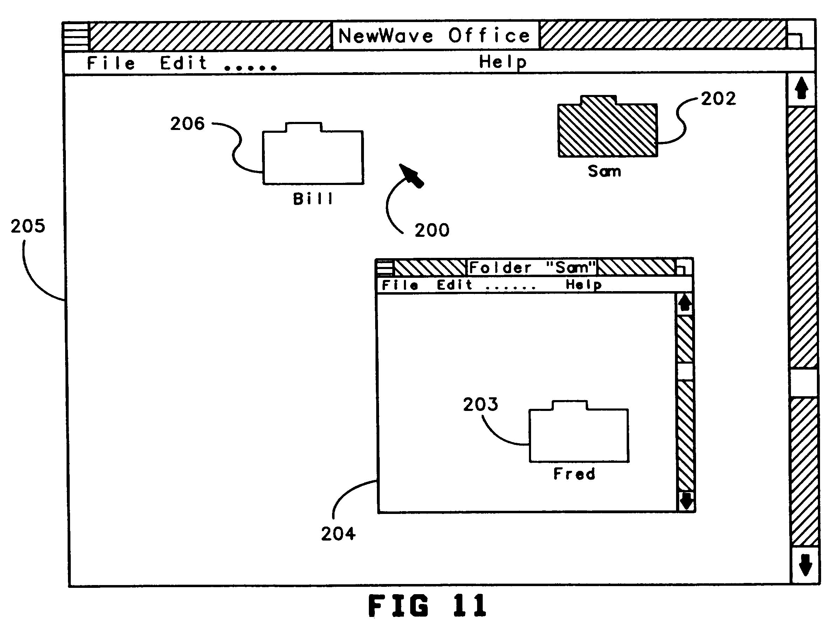

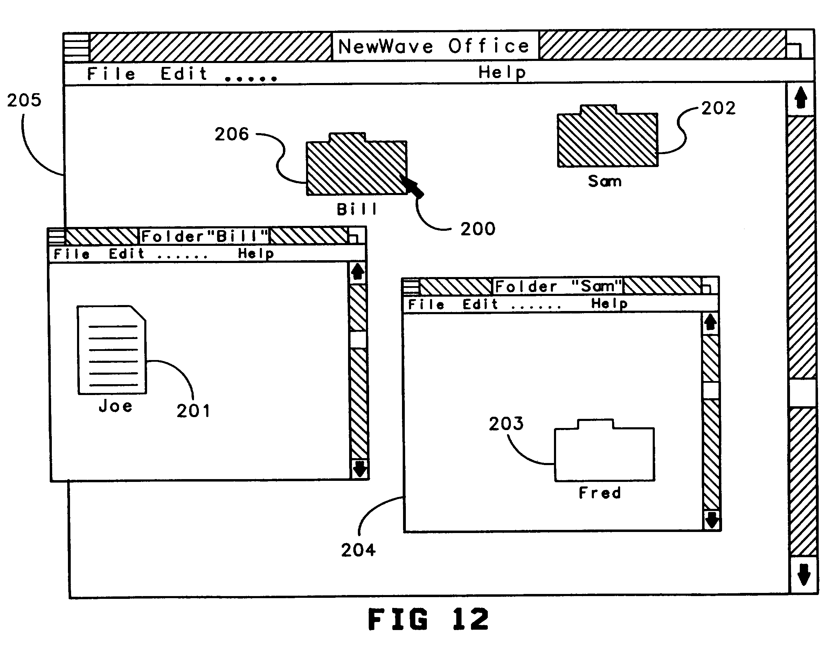

When button 27 is released, action processor 101 generates a semantic command "MOVE_TO Folder 'Bill' ". The semantic command is passed to command processor 102, which causes the previously selected object "Joe" to be transferred to folder "Bill". Figure 11, shows the completed transfer, object "Joe" is in folder "Bill". Translate to external processor 129 puts the command in external form and sends it to class independent recorder 125 and thus to class dependent recorder 126 which records the command in a task language file. When folder "Bill" is opened, as shown in Figure 12, object "Joe" may be seen.

In this case translate to external processor 129 did not have to get additional information about object "Joe" or folder "Bill", because application "NewWave Office" has within itself information that indicates that object "Joe" and folder "Bill" are on its desktop. Additionally, application 100 "NewWave Office" known that folder "Bill" is closed.

Recording to the placement of object "Joe" within folder "Sam" is similar to the above. In Figure 8, window 205 is active. Cursor 200 may be moved about freely in window 205. When button 27 is depressed, action processor 101 checks to see what exists at the present coordinate location of cursor 200. If cursor 200 is placed over object "Joe" when button 27 is depressed, action processor 101 discovers that object "Joe" is at the location of cursor 200. At this time action processor 101 generates a semantic command "Select Document 'Joe' ". The semantic command is passed through playback message test component 150, through command interface component 146 through modal dialog box test component 152 through command test component 151 to command processor 102, which performs the semantic command. The semantic command is also received by Return Interface Component 147 and sent to translate to external processor 129. Translate to external processor puts the command in external form and sends it to class independent recorder 125 and thus to class dependent recorder 126 which records the command in a task language file.

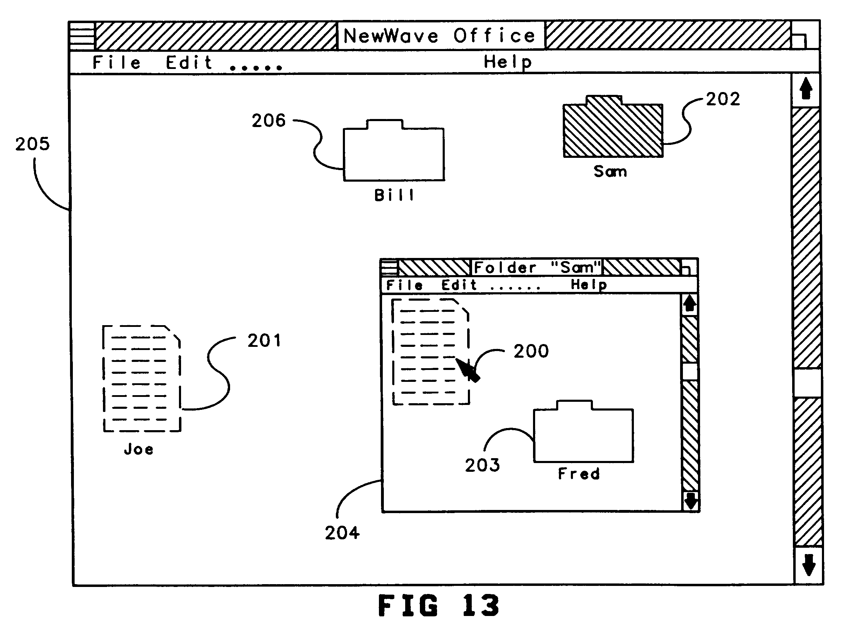

As mouse 20 is moved syntactic user actions continue to be sent to action processor 101. Action processor continues to keep track of the coordinate location of cursor 200. In Figure 13, cursor 200 is shown to be placed within window 204. When button 27 is released, action processor 101 generates a MOVE_TO Folder "Sam" command. The semantic command is passed to command processor 102, which causes the previously selected object "Joe" to be transferred to folder "Bill". The semantic command is also received by return interface component 147 and sent to translate to external processor 129. Translate to external processor 129 sends an "API_INTERROGATE_MSG". The function of the message is "API_WHO_ARE_YOU_FN". As a result of this message, translate to external processor 129 gets returned data indicating that an open window for folder "Sam" is at the location of cursor 200. Translate to external processor 129 sends another "API_INTERROGATE_MSG". The function of the message is again "API_WHATS_INSERTABLE_AT_FN". Since there there is nothing within window 204 at the location of cursor 200, no additional entity is identified.

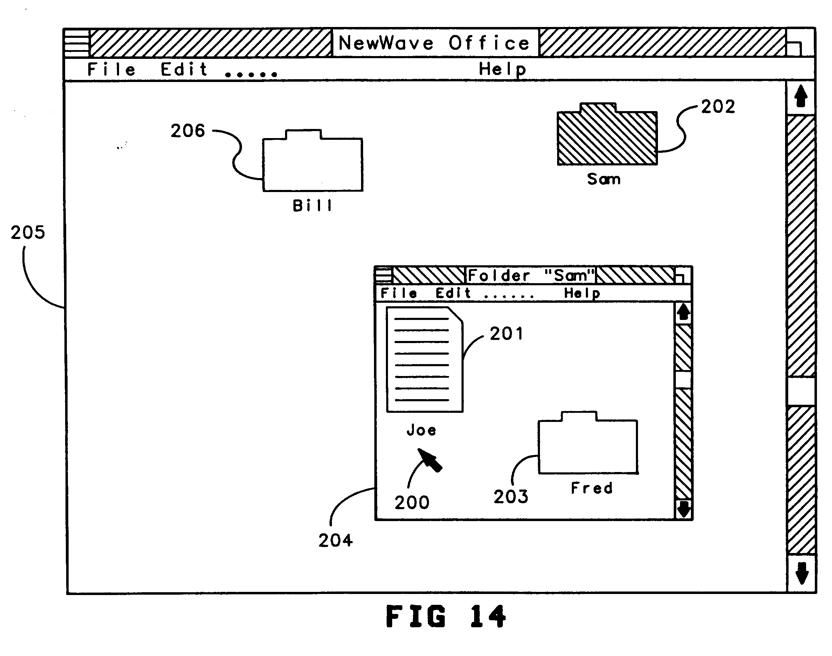

Translate to external processor puts the command in external form and sends it to class independent recorder 125 and thus to class dependent recorder 126, and the command is recorded in task language file 131. Figure 14 shows the result of the completed transfer: object "Joe" is within window 204.

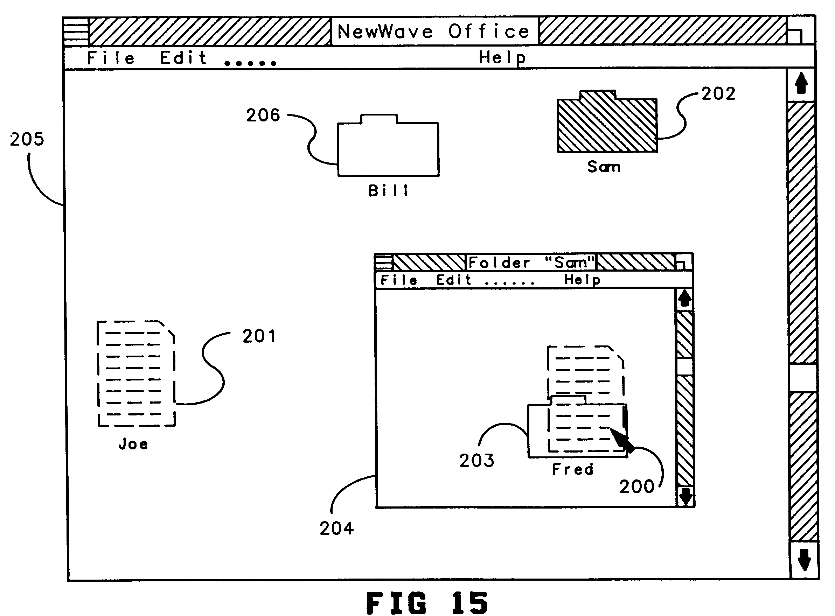

Similarly object "Joe" may be transferred to folder "Fred". In Figure 15, cursor 200 is shown to be placed over folder "Fred" within window 204. When button 27 is released, action processor 101 generates a semantic command "MOVE_TO Folder 'Fred' WITHIN Folder 'Sam'". The semantic command is passed to command processor 102, which causes tne previously selected object "Joe" to be transferred to folder "Fred" within Folder "Sam". The semantic command is also received by return interface component 147 and sent to translate to external processor 129.

Translate to external processor 129 puts the command in external form in the following manner. Translate to external processor 129 sends an "API_INTERROGATE_MSG". The function of the message is "API_WHATS_INSERTABLE_AT_FN". As a result of this message, translate to external processor 129 receives a return message indicating that folder "Fred" is at the location of cursor 200. Translate to external processor sends another "API_INTERROGATE_MSG". The function of the message is "API_WHO_ARE_YOU_FN". As a result of this message, translate to external processor 129 receives return data indicating that folder "Sam" is at the location of cursor 200.

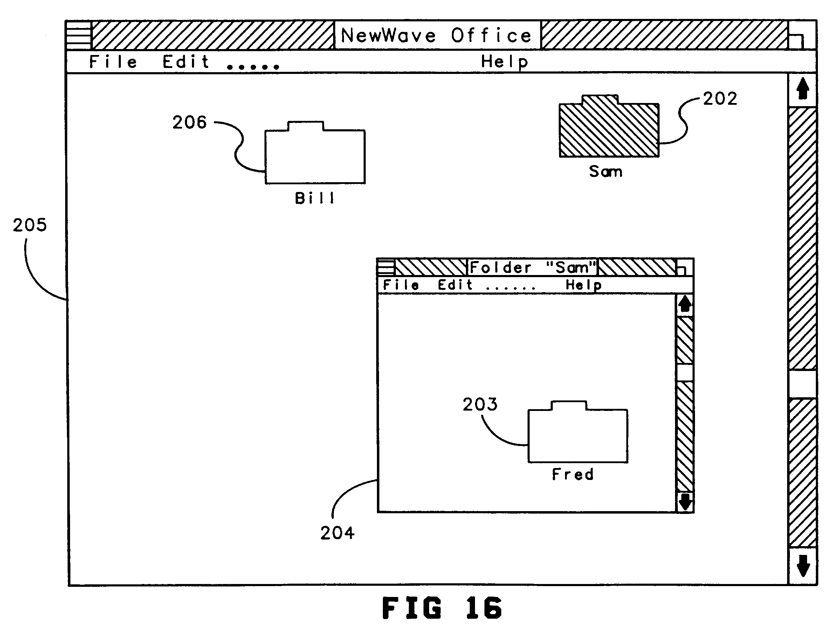

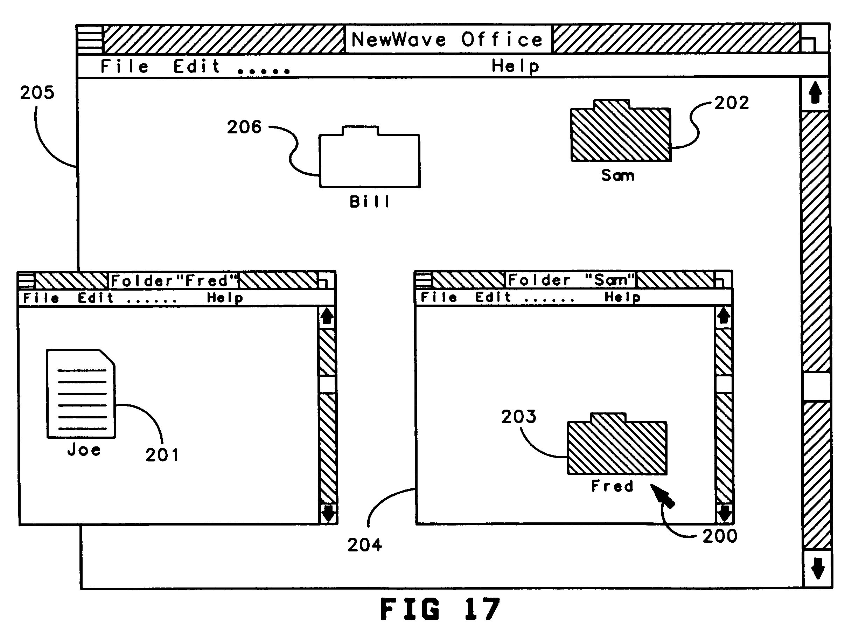

At this time translate to external processor is able to send the command in external form through API 130 to class independent recorder 125 and thus to class dependent recorder 126. Class dependent recorder 126 generates the task language form of the command, which is then recorded in task language file 131. Figure 16, shows the completde transfer, object "Joe" is in folder "Fred". When folder "Fred" is opened, as shown in Figure 17, object "Joe" may be seen.

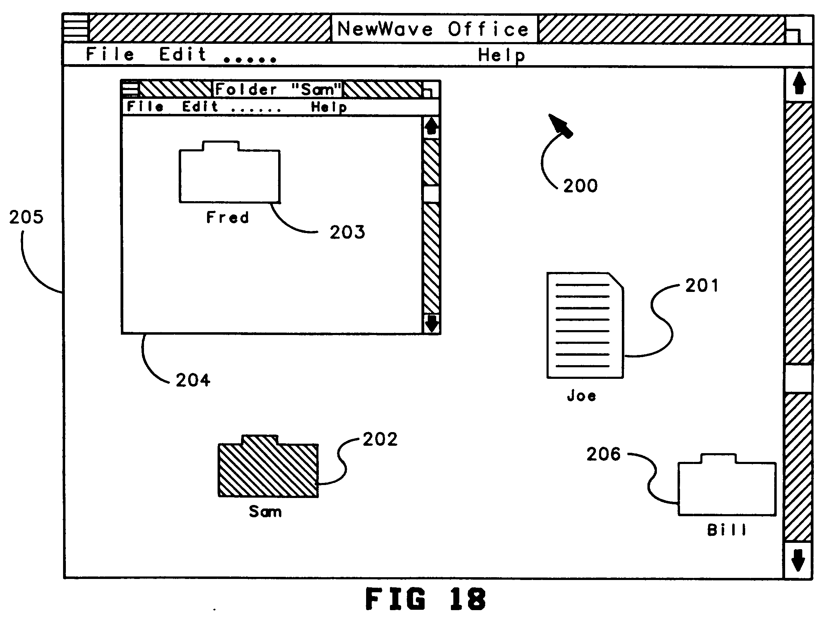

Once in a task language file, the commands which transferred object "Joe" to folder "Fred", may be played back. For instance, suppose window 205 appears as in Figure 18. Since window 204, object text "Joe" and folder "Fred" are all in different locations within window 205, a mere playback of syntactic user actions would not result in object "Joe" being placed within folder "Fred". However, what was recorded was not syntactic user actions but rather semantic commands; therefore, playback of the semantic commands will cause object "Joe" to be placed within Folder "Fred".

Specifically, suppose a task language file contained the following commands:
FOCUS on Desktop "NewWave Office"
SELECT Document "Joe"
MOVE_TO Folder "Fred" WITHIN Folder "Sam".

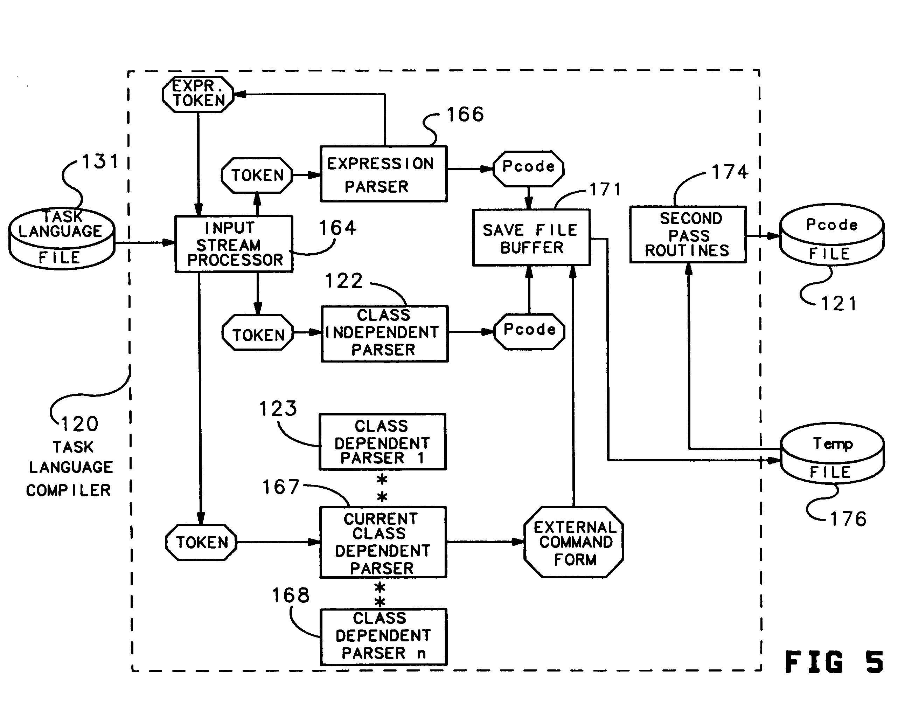

The first command--FOCUS on Desktop "NewWave Office"--is a class independent command and, once compiled by a task language compiler 120 shown in Figure 5, may be executed by agent 108. As will be further described below, the FOCUS command places the focus on the application "NewWave Office". This means that the task language commands are, if possible, to be treated as class dependent commands and sent to application "NewWave Office" for execution. For simplicity of discussion, the application "NewWave Office" is taken to be application 100.

The second and third commands --SELECT Document "Joe"--and --MOVE_TO Folder "Fred" WITHIN Folder "Sam"-- are class dependent commands. These class dependent commands, once compiled by task language compiler 120 into pcode form, are received by agent engine 108. Agent engine extracts the class dependent commands in external form from the pcode form and sends the class dependent commands to application 100. User action interface component 145 of application 100 receives a message containing the external command and forwards the message to playback message test component 150. Playback message test component 150 ships the command to translate to internal processor 128. Translate to internal processor 128 translates the command from external form to internal form and returns the command in internal form to playback test component 150. The command in internal form is then sent through command interface component 146, through modal dialog box test component 152 through command test component 151 to command processor 102. Command processor 102 executes the command.

Agent 108 executes the command "FOCUS on Desktop 'NewWave Office' ", by activating window 205. The position of cursor 200 is now determined with respect to the coordinates of window 205.

When command processor 102 receives the command "SELECT Document 'Joe' ", command processor 102 causes object "Joe" to be selected. Since object "Joe" is within window 205 no additional interrogation is necessary.

When constructing the internal command form for the command "MOVE_TO Folder 'Fred' WITHIN Folder 'Sam' ", translate to internal processor 128 sends an "API_INTERROGATE_MSG" to each open window. The function of the message is "API_WHO_ARE_YOU_FN".

When the window for Folder "Sam" receives this message, it responds with "Folder 'Sam' ". Translate to internal processor 128 sends another "API_INTERROGATE_MSG". The function of the message is "API_WHERE_IS_FN". Folder "Fred" is included as a parameter. The message is forwarded to folder "Sam" which returns data indicating the coordinates of folder "Fred" within window 204. Translate to internal processor 128 then generates the internal form of the command MOVE_TO 'Fred' WITHIN Folder "Sam". Command processor 102 receives the command and transfers object "Joe" to folder "Fred".

Task language file 121 may be generated by compiled code written by a user, as well as by recording. In Figure 5, data flow through a task language compiler 120 is shown. A task language file 131 includes commands written by a user. In the preferred embodiment of the present invention, the task language is written in accordance with the Agent Task Language Guidelines included as Appendix B to this Specification.

Task language compiler 120 is a two pass compiler. In the first pass the routines used include an input stream processor 164, an expression parser 166, a class independent parser 122, a save file buffer 171, second pass routines 174, and class dependent parsers, of which are shown class dependent parser 123, a class dependent parser 167 and a class dependent parser 168. As a result of the first pass a temporary file 176 is created.

Class independent parser 122 parses the class independent task language commands listed in Appendix B. Each application which runs on the system also has special commands which is executes. For each application, therefore, a separate class dependent parser is developed. This parser is able to parse commands to be executed by the application for which it is developed. Class dependent parsers may be added to or deleted from task language compiler 120 as applications are added to or deleted from the system.

When compiling begins, class independent parser 122 requests a token from input stream processor 164. Input stream processor 164 scans task language file 131 and produces the token. Class independent parser 122 then does one of several things. Class independent parser 122 may generate pcode to be sent to save file buffer 171. If class independent parser 122 expects the next token to be an expression, class independent parser 122 will call routine MakeExpression () which calls expression parser 166. Expressions parser 166 requests tokens from input stream processor 164 until the expression is complete. Expression parser 166 then generates pcode to be sent to file buffer 171 and then to be saved in temporary file 176. Additionally, expression parser 166 generates an expression token which is returned to input stream processor 164. Input stream processor 164 delivers this expression to independent parser 122 when it is requested by independent parser 122.

As a result of a FOCUS command, a particular class dependent parser will have priority. Therefore, in its parsing loop, class independent scanner 122a will call the class dependent parser for the application which currently has the focus. The class dependent parser will request tokens from input stream processor 164 until it has received a class dependent command which the semantic routines called by class dependent parser convert to external command form, or until the class dependent parser determines that it cannot parse the expressions that it has received. If the class dependent parser encounters an expression, it may invoke expression parser 166 using the call MakeExpression (). If the class dependent parser is unable to parse the tokens it receives, the class dependent parser returns an error and the class independent parser will attempt to parse the tokens.

A FOCUS OFF command will result in independent parser 122 immediately parsing all commands without sending them to a dependent parser. When a string of class independent commands are being parsed, this can avoid the needless running of dependent parser software, thus saving computing time required to compile the task language.

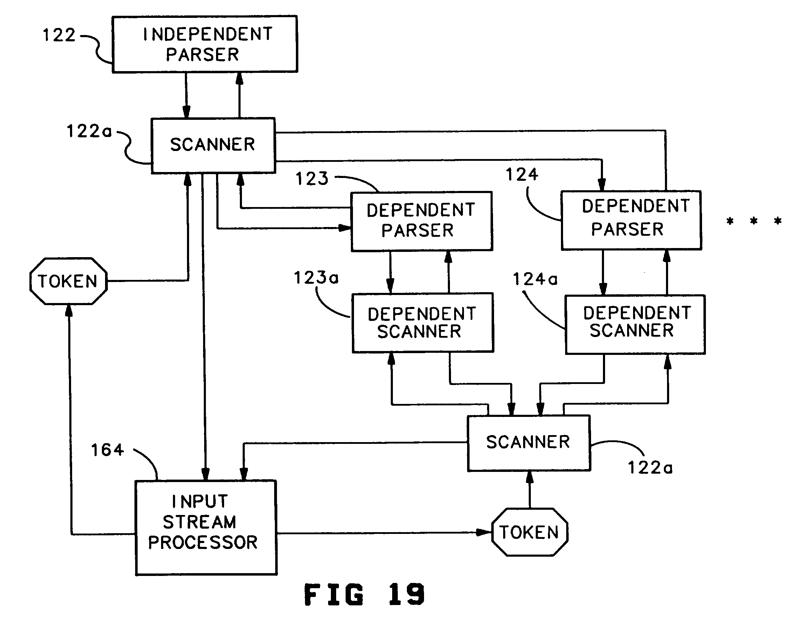

In Figure 19 is shown data flow between independent parser 122 and dependent parsers of which dependent parser 123 and dependent parser 124 are shown. In order to focus the discussion on the relationship between parsers, calls to expression parser 166 by scanner 122a are not taken into account in the discussion of Figure 19.

When independent parser 122 is ready for a token, independent parser 122 calls a scanner routine 122a. Scanner 122a checks if there is a focus on an application. If there is not a focus on an application, scanner 122a calls input stream processor 164 which returns to scanner 122a a token. Scanner 122a returns the token to independent parser 122a.

If there is a focus on an application, the dependent parser for the application has precedence and is called. For instance, when focus is on the application for parser 123, parser 123 calls scanner 122a through a dependent scanner 123a. Scanner 122a checks its state and determines that it is being called by a dependent parser, so it does not recursively call another dependent parser. Scanner 122a calls input stream processor 164 which returns to scanner 122a a token. Scanner 122a returns the token to dependent parser 123 through dependent scanner 123a. Although the present implementation of the present invention includes dependent scanner 123a, in other implementations dependent scanner 123a may be eliminated and parser 123 may call scanner 122a directly.

Dependent parser 123 will continue to request tokens through dependent scanner 123a as long as dependent parser 123 is able to parse the tokens it receives. With these tokens dependent parser will call semantic routines which will generate class dependent external commands embedded in pcode. When dependent parser 123 is unable to parse a token it receives, dependent parser will return to scanner 122a an error. Scanner 122a then calls input stream processor 164 and receives from input stream processor 164 the token which dependent parser 123 was unable to parse. This token is returned to independent parser 122. Independent parser 122 parses the token and calls semantic routines to generate pcode for execution by agent 108. The next time independent parser 122 requests a token from scanner 122a, scanner 122a will again call dependent parser 123 until there is a FOCUS OFF command or until there is a focus on another application.

When the focus is on the application for dependent parser 124, scanner 122a will call dependent parser 124. Dependent parser 124 calls a dependent scanner 124a and operates similarly to dependent parser 123.

Save file buffer 171, shown in Figure 5, receives pcode from class independent parser 122 and from expression parser 166, and receives external command forms embedded in pcode from class dependent parsers. Save file buffer 171 stores this information in a temporary file 176. Second pass routines 174 takes the pcode and external command forms stored in temporary file 176 and performs housekeeping, e.g., fixes addresses etc., in order to generate task language file 121.

## Claims

1. A computing system comprising means for executing programme code (108); a plurality of applications (100); a modular compiler (120) comprising a class independent parser (122) including an input coupled to a task language file containing the text form of commands describing functions associated with the plurality of applications and operative to output application independent commands to be executed by the executing means (108) and data, in a form understandable by a said application, representative of commands to be executed by the said application, the executing means (108) being operative to extract the commands to be executed by the said application from said data and to forward said commands to the said application; a plurality of class dependent parsers (123,124,167,168) each associated with an application from the plurality of applications and able to be called by the class independent parser to parse programme code which includes commands to be executed by the application associated with that class dependent parser into a form understandable by that application; means to add an additional class dependent parser to the modular compiler when an application is added to the computing system; and means to remove a class dependent parser from the modular compiler when an application is removed from the computing system.

2. A computer system according to claim 1, wherein the modular compiler (120) further comprises a scanner (122a) which scans a source file containing code and delivers tokens to the class independent parser (122) and each class dependent parser (123,124,167,168).

3. A computer system according to claim 2, further comprising a plurality of class dependent parsers (123,124,167,168) called by the scanner (122a), each parsing a different set of commands; and a plurality of dependent scanners (123a,124a) called by one of the class dependent parsers so that each class dependent parser calls its own dependent scanner and the called dependent scanner returns a token to the calling class dependent parser; and an input stream processor (164), called by the scanner and each dependent scanner which returns a token to the dependent scanner calling the input stream processor.

4. A computer system according to claims 1 or 2, further comprising an expression parser (166), called by the class independent parser (122) and each of the class dependent parsers (123,124,167,168), which parses expressions.

5. A computer system according to claims 3 or 4, wherein the scanner (122a) is responsive to means (167) for determining which one out of the class dependent parsers (123,124,167,168) and the input stream processor (164) to call.

6. A computer system according to any of claims 3 to 5, wherein when one of the class dependent parsers (123,124,167,168) returns an error, the scanner (122a) calls the input stream processor (164), and returns the token received from the input stream processor to the class independent parser (122).

7. A method for compiling programme code into commands to be executed by execution means (108) and a plurality of applications (100), each application able to execute a different set of commands, the method comprising the steps of receiving the text form of functions associated with each of the plurality of applications (100); parsing the text form using a class independent parser so as to generate application independent commands to be executed by the executing means and data, in a form understandable by one of the plurality of applications, representative of commands to be executed by said one application, wherein said data is generated by means of one of a plurality of class dependent parsers; each dependent parser being associated with one of the plurality of applications; extracting the commands to be executed by said one application from said data using said executing means; and forwarding said commands to said one application.

8. A method as in claim 7, wherein step (a) includes calling a class independent scanner routine (122a) for the independent parser (122) from the independent parser (122) ;
step (b) includes performing the following substeps when a first class dependent parser (123,124,167,168) has precedence:
(b1) calling from a class independent scanner routine (122a) the first class dependent parser,
(b2) at least once calling from the first class dependent parser a first class dependent scanner (123a,124a) for the first class dependent parser;
(b3) returning from the first class dependent scanner to the first class dependent parser a token every time the first class dependent parser calls the first class dependent scanner;
(b4) attempting with the first class dependent parser to parse the token(s) received from the first class dependent parser ;
(b5) returning from the first class dependent parser to the class independent scanner routine an error when the first class dependent parser in unable to parse a token received from the first class dependent scanner; and , wherein after step (a) and step (b), the following step is performed:
returning a token from the class independent scanner routine to the class independent parser.

9. A method as in claim 8, wherein substep (b4) includes the following substep:
(b4.a) calling routines to generate application dependent commands embedded within code when the first class dependent parser (123,124,167,168) is able to parse the token(s) received from the first class dependent scanner (123a,124a), the commands to be extracted by an agent engine (108) and forwarded to an application (100) for execution.

10. A method as in claim 9 additionally comprising the following step:
(c) when the independent parser (122) is able to parse the token from the scanner (122a), calling further routines to generate code for execution by the agent engine (108).

## Patentansprüche

1. Ein Computersystem mit folgenden Merkmalen: einer Einrichtung zum Ausführen eines Programmcodes (108); einer Mehrzahl von Anwendungen (100); einem modularen Compiler (120), der einen Klassen-unabhängigen Analysator (122) aufweist, der einen Eingang aufweist, der mit einer Aufgabensprachendatei gekoppelt ist, die die Textform von Befehlen enthält, die Funktionen beschreiben, die der Mehrzahl von Anwendungen zugeordnet sind, und der wirksam ist, um Anwendungs-unabhängige Befehle, die durch die Ausführungseinrichtung (108) ausgeführt werden sollen, und Daten in einer Form, die durch eine der Anwendungen verstehbar ist, welche Befehle darstellen, die durch die Anwendung ausgeführt werden sollen, auszugeben, wobei die Ausführungseinrichtung (108) wirksam ist, um die Befehle, die durch die Anwendung ausgeführt werden sollen, von den Daten zu extrahieren und die Befehle zu der Anwendung weiterzuleiten; einer Mehrzahl von Klassen-abhängigen Analysatoren (123, 124, 167, 168), von denen jeder einer Anwendung von der Mehrzahl von Anwendungen zugeordnet ist, wobei jeder durch den Klassen-unabhängigen Analysator aufgerufen werden kann, um einen Programmcode, der Befehle enthält, die durch die Anwendung ausgeführt werden sollen, welche dem Klassen-abhängigen Analysator zugeordnet ist, in eine Form zu analysieren, die von der Anwendung verstehbar ist; einer Einrichtung zum Hinzufügen eines zusätzlichen Klassen-abhängigen Analysators zu dem modularen Compiler, wenn eine Anwendung zu dem Computersystem hinzugefügt wird; und einer Einrichtung zum Entfernen eines Klassen-abhängigen Analysators von dem modularen Compiler, wenn eine Anwendung von dem Computersystem entfernt wird.

2. Ein Computersystem gemäß Anspruch 1, bei dem der modulare Compiler (120) ferner eine Abtastvorrichtung (122a) aufweist, die eine Quellendatei abtastet, welche einen Code enthält, und dem Klassen-unabhängigen Analysator (122) und jedem Klassen-abhängigen Analysator (123, 124, 167, 168) Token liefert.

3. Ein Computersystem gemäß Anspruch 2, das ferner eine Mehrzahl von Klassen-abhängigen Analysatoren (123, 124, 167, 168) aufweist, die durch die Abtastvorrichtung (122a) aufgerufen werden, wobei jeder einen unterschiedlichen Satz von Befehlen analysiert; und eine Mehrzahl von abhängigen Abtastvorrichtungen (123a, 124a), die durch einen der Klassen-abhängigen Analysatoren aufgerufen werden, derart, daß jeder Klassen-abhängige Analysator seine eigene abhängige Abtastvorrichtung aufruft und die aufgerufene abhängige Abtastvorrichtung ein Token zu dem aufrufenden Klassen-abhängigen Analysator zurückgibt; und einen Eingangsstromprozessor (164), der durch die Abtastvorrichtung und jede abhängige Abtastvorrichtung aufgerufen wird, der ein Token zu der abhängigen Abtastvorrichtung, die den Eingangsstromprozessor aufruft, zurückgibt.

4. Ein Computersystem gemäß Anspruch 1 oder 2, das ferner einen Ausdruckanalysator (166) aufweist, der durch den Klassen-unabhängigen Analysator (122) und jeden der Klassen-abhängigen Analysatoren (123, 124, 167 und 168) aufgerufen wird und Ausdrücke analysiert.

5. Ein Computersystem gemäß Anspruch 3 oder 4, bei dem die Abtastvorrichtung (122a) auf die Einrichtung (167) anspricht, um zu bestimmen, welcher von den Klassen-abhängigen Analysatoren (123, 124, 167, 168) und dem Eingangsstromprozessor (164) aufgerufen werden soll.

6. Ein Computersystem gemäß einem beliebigen der Ansprüche 3 bis 5, bei dem, wenn einer der Klassen-abhängigen Analysatoren (123, 124, 167, 168) einen Fehler zurückgibt, die Abtastvorrichtung (122a) den Eingangsstromprozessor (164) aufruft und das Token, das von dem Eingangsstromprozessor empfangen wurde, zu dem Klassen-unabhängigen Analysator (122) zurückgibt.

7. Ein Verfahren zum Compilieren eines Programmcodes in Befehle, die durch eine Ausführungseinrichtung (108) und eine Mehrzahl von Anwendungen (100) ausgeführt werden sollen, wobei jede Anwendung in der Lage ist, einen unterschiedlichen Satz von Befehlen auszuführen, wobei das Verfahren folgende Schritte aufweist: Empfangen der Textform von Funktionen, die jeder der Mehrzahl von Anwendungen (100) zugeordnet sind; Analysieren der Textform unter Verwendung eines Klassen-unabhängigen Analysators, um anwendungsunabhängige Befehle, die durch die Ausführungseinrichtung ausgeführt werden sollen, und Daten in einer Form, die durch eine der Mehrzahl von Anwendungen verstehbar ist, welche Befehle darstellen, die durch die eine Anwendung ausgeführt werden sollen, zu erzeugen, wobei die Daten mittels eines einer Mehrzahl von Klassen-abhängigen Analysatoren erzeugt werden, wobei jeder abhängige Analysator einer der Mehrzahl von Anwendungen zugeordnet ist; Extrahieren der Befehle, die durch die eine Anwendung ausgeführt werden sollen, aus den Daten unter Verwendung der Ausführungseinrichtung; und Weiterleiten der Befehle zu der einen Anwendung.

8. Ein Verfahren gemäß Anspruch 7, bei dem der Schritt (a) das Aufrufen einer Klassen-unabhängigen Abtastvorrichtungs-Routine (122a) für den unabhängigen Analysator (122) von dem unabhängigen Analysator (122) aufweist;
der Schritt (b) das Durchführen der folgenden Teilschritte aufweist, wenn ein erster Klassen-abhängiger Analysator (123, 124, 167, 168) Priorität besitzt:
(b1) Aufrufen des ersten Klassen-abhängigen Analysators von einer Klassen-unabhängigen Abtastvorrichtungs-Routine (122a),
(b2) zumindest einmaliges Aufrufen einer ersten Klassen-abhängigen Abtastvorrichtung (123a, 124a) für den ersten Klassen-abhängigen Analysator von dem ersten Klassen-abhängigen Analysator;
(b3) Zurückgeben eines Tokens von der ersten Klassen-abhängigen Abtastvorrichtung zu dem ersten Klassen-abhängigen Analysator jedesmal, wenn der erste Klassen-abhängige Analysator die erste Klassen-abhängige Abtastvorrichtung aufruft;
(b4) Versuchen, das Token (die Token), das (die) von der ersten Klassen-abhängigen Abtastvorrichtung empfangen wird (werden), mit dem ersten Klassen-abhängigen Analysator zu analysieren;
(b5) Zurückgeben eines Fehlers von dem ersten Klassen-abhängigen Analysator zu der Klassen-unabhängigen Abtastvorrichtungs-Routine, wenn der erste Klassen-abhängige Analysator nicht in der Lage ist, ein Token zu analysieren, das von der ersten Klassen-abhängigen Abtastvorrichtung empfangen wird; und bei dem nach dem Schritt (a) und dem Schritt (b) der folgende Schritt durchgeführt wird:
Zurückgeben eines Tokens von der Klassen-unabhängigen Abtastvorrichtungs-Routine zu dem Klassen-unabhängigen Analysator.

9. Ein Verfahren gemäß Anspruch 8, bei dem der Teilschritt (b4) folgenden Teilschritt aufweist:
(b4.a) Aufrufen von Routinen, um Anwendungs-abhängige Befehle zu erzeugen, die in einen Code eingebettet sind, wenn der erste Klassen-abhängige Analysator (123, 124, 167, 168) in der Lage ist, das Token (die Token), das (die) von der ersten Klassen-abhängigen Abtastvorrichtung (123a, 124a) empfangen wird (werden), zu analysieren, wobei die Befehle von einer Handlungsmaschine (108) extrahiert und zur Ausführung zu einer Anwendung (100) weitergeleitet werden sollen.

10. Ein Verfahren gemäß Anspruch 9, das zusätzlich folgenden Schritt aufweist:
(c) wenn der unabhängige Analysator (122) in der Lage ist, das Token von der Abtastvorrichtung (122a) zu analysieren, Aufrufen weiterer Routinen, um einen Code zur Ausführung durch die Handlungsmaschine (108) zu erzeugen.

## Revendications

1. Système d'ordinateur comprenant des moyens pour exécuter un code de programme (108); une pluralité d'applications (100); un compilateur modulaire (120) comprenant un programme d'analyse qui ne dépend pas de classes (122) comportant une entrée couplée à un fichier de langage de tâches contenant la forme de texte des commandes décrivant les fonctions associées à la pluralité d'applications, et fonctionnant en délivrant en sortie des commandes ne dépendant pas des applications, destinées à être exécutées par les moyens d'exécution (108), et des données, sous une forme compréhensible par ladite application, représentant des commandes destinées à être exécutées par ladite application, les moyens d'exécution (108) fonctionnant en extrayant les commandes destinées à être exécutées par ladite application à partir desdites données, et en acheminant lesdites commandes à ladite application; une pluralité de programmes d'analyse qui dépendent de classes (123, 124, 167, 168), associés chacun à une application parmi la pluralité d'applications, et capables d'être appelés par le programme d'analyse qui ne dépend pas de classes pour analyser le code de programme qui comporte des commandes destinées à être exécutées par l'application associée à ce programme d'analyse qui dépend de classes, sous une forme compréhensible par cette application; des moyens pour ajouter au compilateur modulaire un programme supplémentaire d'analyse qui dépend de classes, lorsqu'une application est ajoutée au système d'ordinateur; et des moyens pour supprimer du compilateur modulaire un programme d'analyse qui dépend de classes, lorsqu'une application est supprimée du système d'ordinateur.

2. Système d'ordinateur selon la revendication 1, dans lequel le compilateur modulaire (120) comprend en outre un sous-programme de balayage (122a) qui balaie un fichier source contenant un code, et délivre des jetons au programme d'analyse qui ne dépend pas de classes (122), et à chaque programme d'analyse qui dépend de classes (123, 124, 167, 168).

3. Système d'ordinateur selon la revendication 2, comprenant en outre une pluralité de programmes d'analyse qui dépendent de classes (123, 124, 167, 168), appelés par le sous-programme de balayage (122a), analysant chacun un jeu de commandes différent; et une pluralité de sous-programmes de balayage dépendants (123a, 124a), appelés par l'un des programmes d'analyse qui dépendent de classes, de façon que chaque programme d'analyse qui dépend de classes appelle son propre sous-programme de balayage dépendant, et que le sous-programme de balayage dépendant retourne un jeton au programme d'analyse appelant qui dépend de classes; et un processeur de courant d'entrée (164), appelé par le sous-programme de balayage et chaque sous-programme de balayage dépendant, qui retourne un jeton au sous-programme de balayage dépendant appelant le processeur de courant d'entrée.

4. Système d'ordinateur selon les revendications 1 ou 2, comprenant en outre un programme d'analyse d'expression (166), appelé par le programme d'analyse qui ne dépend pas de classes (122) et chacun des programmes d'analyse qui dépendent de classes (123, 124, 167, 168), qui analyse des expressions.

5. Système d'ordinateur selon les revendications 3 ou 4, dans lequel le sous-programme de balayage (122a) répond à des moyens (167) pour déterminer lequel des programmes d'analyse qui dépendent de classes (123, 124, 167, 168) et du processeur de courant d'entrée (164), doit être appelé.

6. Système d'ordinateur selon l'une quelconque des revendications 3 à 5, dans lequel, lorsque l'un des programmes d'analyse qui dépendent de classes (123, 124, 167, 168) retourne une erreur, le sous-programme de balayage (122a) appelle le processeur de courant d'entrée (164), et retourne le jeton reçu du processeur de courant d'entrée au programme d'analyse qui ne dépend pas de classes (122).

7. Procédé pour compiler un code de programme en commandes destinées à être exécutées par des moyens d'exécution (108) et une pluralité d'applications (100), chaque application étant capable d'exécuter un jeu de commandes différent, le procédé comprenant les étapes de réception de la forme de texte de fonctions associées à chacune parmi la pluralité d'applications (100); analyse de la forme de texte en utilisant un programme d'analyse qui ne dépend pas de classes, de façon à générer des commandes ne dépendant pas des applications, destinées à être exécutées par les moyens d'exécution, et des données, sous une forme compréhensible par l'une parmi la pluralité d'applications, représentant des commandes destinées à être exécutées par ladite une application, dans lequel lesdites données sont générées au moyen de l'un parmi une pluralité de programmes d'analyse qui dépendent de classes, chaque programme d'analyse dépendant étant associé à l'une parmi la pluralité d'applications; extraction des commandes destinées à être exécutées par ladite une application, d'après lesdites données, en utilisant lesdits moyens d'exécution; et acheminement desdites commandes à ladite une application.

8. Procédé selon la revendication 7, dans lequel l'étape (a) comporte l'appel d'un sous-programme de balayage qui ne dépend pas de classes (122a), pour le programme d'analyse indépendant (122), depuis le programme d'analyse indépendant (122);
l'étape (b) comporte l'exécution des sous-étapes suivantes lorsqu'un premier programme d'analyse qui dépend de classes (123, 124, 167, 168) a priorité:
(b1) appel depuis un sous-programme de balayage qui ne dépend pas de classes (122a), du premier programme d'analyse qui dépend de classes,
(b2) appel, au moins une fois depuis le premier programme d'analyse qui dépend de classes, d'un premier sous-programme de balayage qui dépend de classes (123a, 124a), pour le premier programme d'analyse qui dépend de classes;
(b3) retour d'un jeton, depuis le premier sous-programme de balayage qui dépend de classes au premier programme d'analyse qui dépend de classes, à chaque fois que le premier programme d'analyse qui dépend de classes appelle le premier sous-programme de balayage qui dépend de classes;
(b4) essai, avec le premier programme d'analyse qui dépend de classes d'analyser, d'analyse du (des) jeton(s) reçu(s) depuis le premier programme d'analyse qui dépend de classes;
(b5) retour d'une erreur, depuis le premier programme d'analyse qui dépend de classes, au sous-programme de balayage qui ne dépend pas de classes, lorsque le premier programme d'analyse qui dépend de classes est incapable d'analyser un jeton reçu depuis le premier sous-programme de balayage qui dépend de classes; et, dans lequel après l'étape (a) et l'étape (b), l'étape suivante est exécutée:
retour d'un jeton depuis le sous-programme de balayage qui ne dépend pas de classes au programme d'analyse qui ne dépend pas de classes.

9. Procédé selon la revendication 8, dans lequel la sous-étape (b4) comporte la sous-étape suivante:
(b4.a) appel de sous-programmes pour générer des commandes qui dépendent d'applications, incorporées dans le code, lorsque le premier programme d'analyse qui dépend de classes (123, 124, 167, 168) est capable d'analyser le(s) jeton(s) reçu(s) depuis le premier sous-programme de balayage qui dépend de classes (123a, 124a), les commandes étant destinées à être extraites par un moteur d'agent (108) et acheminées vers une application (100) pour exécution.

10. Procédé selon la revendication 9, comprenant de plus l'étape supplémentaire de:
(c) lorsque le programme d'analyse indépendant (122) est capable d'analyser le jeton provenant du sous-programme d'analyse (122a), appel d'autres sous-programmes pour générer un code pour exécution par le moteur d'agent (108).
